# EUROPEAN PATENT SPECIFICATION

(11) **EP 3 316 385 B1**
(45) Date of publication and mention of the grant of the patent: **17.04.2019**
(21) Application number: 16195685.9
(22) Date of filing: 26.10.2016
(51) Int. Cl.: H01M 10/42, G06F 1/14, G06F 1/32, B60L 11/18

(54) **BATTERY SYSTEM WITH INTERNALLY POWERED REAL TIME CLOCK, POWER SUPPLY CIRCUIT FOR A REAL TIME CLOCK AND METHOD FOR OPERATING A REAL TIME CLOCK OF A BATTERY SYSTEM**
BATTERIESYSTEM MIT INTERN ANGETRIEBENER ECHTZEITUHR, STROMVERSORGUNGSSCHALTUNG FÜR EINE ECHTZEITUHR UND VERFAHREN ZUM BETREIBEN EINER ECHTZEITUHR EINES BATTERIESYSTEMS
SYSTÈME DE BATTERIE AVEC HORLOGE EN TEMPS RÉEL À ALIMENTATION INTERNE, CIRCUIT D'ALIMENTATION ÉLECTRIQUE POUR UNE HORLOGE EN TEMPS RÉEL ET PROCÉDÉ POUR FAIRE FONCTIONNER UNE HORLOGE EN TEMPS RÉEL D'UN SYSTÈME DE BATTERIE

(43) Date of publication of application: 02.05.2018
(73) Proprietor: Samsung SDI Co., Ltd., Giheung-gu Yongin-si, Gyeonggi-do 17084 (KR)
(72) Inventor: Hofer, Maximilian, 8230 Hartberg (AT); Korherr, Thomas, 8230 Hartberg (AT)
(74) Representative: Gulde & Partner

(56) References cited:
- GB-A- 2 472 030
- US-A1- 2007 074 056
- US-A1- 2007 101 171
- US-A1- 2013 187 605
- US-A1- 2015 082 065
- US-A1- 2015 295 426
- US-A1- 2015 362 987

## Description

### Field of the Invention

The present invention relates to a battery system with internally powered real time clock (RTC), particularly to a self-supplied battery system comprising a real time clock, and to a power supply circuit for a real time clock.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

Various control and communication processes regarding the battery system, its constituents or the electric consumers are time dependent processes. Monitoring and controlling the charging of battery cells might e.g. require the determination of the rate of change of the state of charge. Further, also in idle periods of the electric consumers, i.e. in periods of minimal load, various parameters, e.g. battery voltages and internal resistances, must be periodically controlled during wake up periods to avoid a system failure, e.g. due to a thermal runaway or short circuits of individual cells. In order to provide a time scale, e.g. for the wake up, the control electronics, i.e. a battery monitoring unit (BMU) and/or a battery management system (BMS), of the battery system comprise a real time clock (RTC).

The real time clock is usually provided as an integrated circuit (IC) and may comprise a crystal oscillator or may use the power line frequency for deriving the time scale. The RTC must be continuously energized in order to keep track of running time and may further comprise a volatile or non-volatile memory in order to keep time related information such as calendar date. For security reasons an alternate power source, e.g. a lithium button cell battery or a capacitor, might be provided additionally to a primary power source.

In battery systems, e.g. in a battery system of an electric vehicle, a low-dropout regulator (LDO) is frequently used for supplying the RTC. An LDO is an active linear voltage regulator that dissipates power in order to regulate the output voltage. Hence, the power consumption of an LDO is high. This is disadvantageous particularly with respect to the extended idle times of electric vehicles. Further, the purchase costs for commercial LDOs are high.

US 2015/02954526 A1 discloses an electronic device with a built-in battery, wherein the battery comprises a battery stack, a controller, a switch S1 and a feed circuit. The controller operates when the electronic device is in the power-off state and controls the first switch. The switch S1 is located between the feed circuit and a second battery terminal that powers a RTC. The feed circuit comprises a second switch and a voltage regulator such as a linear voltage regulator.

It is thus an object of the present invention to overcome at least some of the disadvantages of the prior art and to provide an alternative power supply for the RTC of a battery system. Thereby, the power supply shall decrease the power consumption of the battery system, especially during idle periods, while guaranteeing a secure power supply of the RTC during all operational states of the battery system and/or the RTC. Further, production costs of the battery system shall be decreased.

### Summary of Invention

One or more of the drawbacks of the prior art could be avoided or at least reduced by means of the present invention. In particular, according to a first aspect of the invention a battery system with internally powered real time clock is provided that comprises a plurality of battery cells connected in series and/or in parallel between a first terminal and a second terminal of the plurality of battery cells. In other words, a voltage corresponding to the added voltage of the battery cells connected in series applies between the first terminal and the second terminal. The first terminal and the second terminal may be terminals of a battery module.

The battery system further comprises a real time clock (RTC) that is electrically connected to a first node of the plurality of battery cells. Preferably the RTC is an integrated circuit providing the functionality of a common RTC. The first node of the plurality of battery cells is defined in that the voltage of a single battery cell of the plurality of battery cells connected in series and/or in parallel applies to the first node, e.g. between the first node and ground. A single battery cell is connected between the first node and the first or second terminal of the plurality of battery cells and the voltage of the single cell applies between one of the first and second terminals and the first node. Alternatively, the first node is connected to a first clamp and a second clamp, wherein a single battery cell is connected between the first clamp and the second clamp. The first node may be connected to any of the plurality of battery cells. According to the present invention, the real time clock draws power via the first node in a first operation state and in a second operation state of the battery system, i.e. the single battery cell supplies the RTC at all times.

The battery system further comprises a control unit that is electrically connected to at least one of the first terminal and the second terminal of the plurality of battery cells. In other words, a voltage corresponding to the added voltage of the battery cells connected in series between the first terminal and the second terminal applies to the control unit, particularly to an input of the control unit. In other words, the control unit is configured for receiving an input voltage from the plurality of battery cells via at least one of its inputs. According to this embodiment, the real time clock is electrically connected to a first output of the control unit and draws power via the first node in the first operation state of the battery system and draws power via the first node and via the first output of the control unit in the second operation state of the battery system. Hence, the real time clock can draw more power in the second operation state than in the first operation state without any active switching. The RTC passively draws additional power in the second operation state from the first output of the control unit.

The control unit is inactive in the first operation state and is active in the second operation state of the battery system. In other words, the first operation state of the battery system is an idle or sleep mode of the control unit and further preferred an idle or sleep mode of the whole battery system. The second operation state preferably is an active state of the battery system. The active state of the battery system might occur during charging, while providing power to a load or during intermittently occurring system wake ups for control purposes. The active state is characterized in that the active control unit is configured for providing at least one supply voltage via at least one output. Thus, the real time clock can draw power from a single cell in the first operation state and can draw power from that single cell and from an output of the active control unit in the second operation state. Thus, power demand of the RTC can be met in both operation states without any active switching in the power supply circuit of the RTC.

The present invention relates to a battery system with an integrated RTC that may be completely energized by power provided by a single battery cell of that battery system. According to the present invention any active regulators or active switching means between the single battery cell and the RTC are omitted. The RTC passively draws power from the single cell according to an actual power demand. As no active elements are arranged between the single cell and the RTC solely the load of the RTC is burden on the single battery cell. The low power consumption of modern RTCs considered, even balancing between the single cell and the remaining battery cells of the battery system can be omitted.

Preferably, passive elements are used to adapt the output voltage of the single battery cell to the input voltage requirements of the RTC. Particularly preferred ohmic resistances and/or diodes are used to lower the output voltage of the battery cell. Due to the small currents drawn by the RTC the voltage drop over these passive elements can be set to be minimal.

In a further preferred embodiment, the control unit is configured for transmitting control information to the real time clock during the second operation state of the battery system. In other words, the active control unit might actively read out or (re-)program the RTC during the second operation state. The real time clock is configured for receiving and processing the control information from the control unit, by what the power consumption of the RTC increases. In order to meet the increased power demand of the RTC during communication with the control unit in the second operation state, the RTC (passively) draws power from the single cell and from a supply power output (first output) of the control unit.

In a particularly preferred embodiment, the second operation state of the battery system occurs during wake ups of the control unit for control purposes, e.g. for measuring voltages and internal resistances of the battery system. According to this embodiment, the real time clock is configured for transmitting a wake up signal to the control unit in the first operation state of the battery system and the control unit is configured for transferring the battery system to the second operation state in response to the wake up signal. The wake up signal may be based on the clock signal of the RTC and also may occur periodically. Preferably the battery system further comprises an energy storage element that is configured for supplying power to the real time clock. The energy storage element ensures that the RTC is capable of transmitting the wake up signal to the control unit in the first operation state of the battery system. The energy storage element may be a condenser with suitable capacity that can be charged during the second operation state of the battery system.

In principal the low power consumption of modern RTCs renders balancing between the single cell and the remaining battery cells of the battery system redundant. However, the RTC will produce a higher load on the connected single battery cell and thus some unbalanced discharge of this cell will occur. Exemplarily, an RTC with a nominal current consumption of 600 nA is considered. Over the battery system's total life time of approximately 15 years a total charge misbalance of 15 a*365.25 day*24 h*600 nA = 78,9 mAh results. If one considers a balancing current not more than 55 mA, a total balancing time of 78,9 mAh/55 mA = 1.43 h is required. Further considered that each individual battery cell of the plurality of battery cells can be used for balancing, the total balancing time per cell further reduces. Exemplarily for a total of twelve battery cells a balancing time of 7.15 min per cell is resulting. In other words, the discharge of the first cell is negligible and active balancing is not mandatorily required.

However, according to a further preferred embodiment the battery system comprises an active balancing unit that is electrically connected to the first node of the plurality of battery cells and that is configured for supplying power to the single battery cell. Particularly preferred, the active balancing unit is electrically connected to a second output of the control unit and comprises a step-down converter, e.g. a buck converter. Thus, the active balancing unit is fed with another supply voltage of the control unit that may be higher than the supply voltage that is supplied to the first output of the control unit. Hence, the active balancing unit can recharge the single battery cell during the second operation state of the battery system.

In a particularly preferred embodiment of the battery system according to the present invention, the plurality of battery cells, the control unit and the real time clock are arranged in a common housing. Thus, the RTC and the control unit are integrated in the battery system. Advantageously this packaging increases security and robustness and decreases wiring resistance and complexity of the battery system. Further preferred, the control unit and the real time clock are arranged on a common circuit carrier. Thus, wiring resistance and complexity and temperature differences between RTC and control unit are further reduced.

A further aspect of the present invention relates to a power supply circuit for a real time clock, comprising a central node that is electrically connected to a power input of the real time clock and a first node that is electrically connected to the central node. According to the present invention, a single battery cell of a plurality of battery cells connected in parallel and/or in series between a first and a second terminal is connected between the first node and a first terminal or a second terminal. Thus, the voltage of a single battery cell applies to the first node. The power supply circuit provides a simple design for powering an RTC by utilizing an outermost battery cell of a battery cell stack. Advantageously, based on the nominal power consumption of modern RTCs, the discharge of this outermost battery cell is negligible and thus alternative power sources, balancing means and/or active switching means can be omitted. Thus, the power supply circuit has minimal power consumption and reduced production costs. Alternatively, the first node is connected to a first clamp and to a second clamp and a single battery cell is connected between the first and second clamp. Thus, an arbitrary cell might be used instead of the outermost cell.

The power supply circuit according to the present invention further comprises a second node that is electrically connected to the central node and to a first output of a battery system control unit, wherein the battery system control unit is electrically connected to one of the first terminal and the second terminal of the plurality of battery cells and provides a supply voltage via its first output. Thus, the power supply circuit comprises another port for supplying power to the central node and hence the RTC connected to the central node can draw power from the single battery cell and from the first output of the battery system control unit. The battery system control unit might be a battery management system (BMS), a battery monitoring unit (BMU) or a comparable microcontroller.

Preferably, the power supply circuit according to the present invention comprises an energy storage element. The energy storage element is electrically connected to the central node and is configured for supplying power to the real time clock. The RTC uses the additional power for generating and transmitting a wake up signal to the battery system control unit. In other words, the energy storage element relieves the single battery cell in the first operation mode and ensures dynamic supply of sufficient energy during wake up. Although active balancing can be omitted in the present invention, the power supply circuit can further comprise an active balancing unit that is electrically connected between the first node and a second output of the control unit. In other words, the active balancing unit is fed with another supply voltage of the control unit, preferably with a higher supply voltage than that supplied to the first output of the control unit. Particularly preferred, the active balancing unit comprises a step-down converter, e.g. a buck converter.

Further preferred, the power supply circuit comprises at least one ohmic resistance connected between the first node and the central node. These ohmic resistances provide a voltage drop and thus adapt the output voltage of the single battery cell to the required input voltage of the RTC. Also preferred, the power supply circuit comprises a diode connected between the first output of the control unit and the second node. This diode prevents current, e.g. from the single battery cell, to flow into the control unit during the first operation state. The power supply circuit preferably comprises at least one ohmic resistance connected between the step-down converter of the active balancing unit and the first node for adapting the output voltage of the step down converter to a required charging voltage of the single battery cell. As solely passive components are used for these functions power losses are reduced and switching noise is omitted.

Another aspect of the present invention relates to a method for operating a real time clock of a battery system, the battery system comprising a plurality of battery cells that are connected in series and/or in parallel between a first terminal and a second terminal of the plurality of battery cells, wherein the method is comprising the step of supplying power to the real time clock from a single battery cell of the plurality of battery cells in a first operation state and in a second operation state of the battery system. Therein a control unit that is electrically connected to one of the first and the second terminal is inactive in the first operation state and active in the second operation state of the battery system. In the method according to the present invention, the RTC draws power from the single battery cell in both operation states of the control unit, preferably in both operation states of the battery system. Preferably the first operation state of the control unit is a sleep mode of the control unit and further preferred of the whole battery system. In the first operation state, i.e. the sleep mode, the RTC is preferably solely supplied by the single battery cell. According to the method of the invention, no active elements, e.g. active elements of the control unit, are involved in power supplying the RTC and thus power losses and switching noise in the active elements is omitted.

Further preferred, the method according to the invention further comprises the step of supplying power to the real time clock from a single battery cell and a first output of the control unit in a second operation state of the battery system. In the second operation state, which is an active state of the battery system and of the control unit, the RTC is supplied by the single battery cell and by the first output of the control unit. In the second operation state the control unit receives an input voltage from the plurality of battery cells and provides a supply voltage via the first output. Hence the RTC can passively draw more power and can thus meet its increased power demands without the need for active switching elements.

In a further preferred embodiment the method according to the invention further comprises the step of drawing power from an energy storage element by the real time clock for transmitting a wake up signal to the control unit in the first operation state of the battery system and the step of transferring the battery system in the second operation state by the control unit in response to the wake up signal. In other words the RTC wakes up the control unit at a predetermined time or after a predetermined time period based on its internal time scale by outputting a wake up signal to the control unit. As the RTC normally draws power solely from the single battery cell in the first operation state, the generation of the wake up signal could lead to an undersupply of the RTC and thus to a loss of the internal time scale. To avoid this, the energy storage element can provide additional power for a short time period of generating and transmitting the wake up signal. Further preferred, the method comprises the step of charging the energy storage element in the second operation state of the battery system via the first output of the control unit. In the second operation state, the first output of the active control unit is energized and the energy storage element can be filled before the next first operation state of the battery system is initiated, e.g. by the control unit.

Further preferred, the method according to the invention comprises the step of transmitting control information from the control unit to the real time clock during the second operation state of the battery system, the step of receiving and processing the control information in the real time clock and the step of transmitting an response information to the control unit by the real time clock in response to the control information. These steps effect an increased power consumption of the RTC during the second operation state of the control unit that actively communicates with the RTC. The increased power demand is covered by the active control unit as the RTC can draw power from the first output of the active control unit.

Depending on the power demand of the RTC, particularly during the second operation state of the battery system, misbalanced discharge of the single battery cell occurs that might decrease the capacity of the battery system. Thus, in a preferred embodiment the method further comprises the step of supplying power to the single battery cell in the second operation state of the battery system from an active balancing unit. Therein, the active balancing unit is electrically connected to a second output of the control unit and comprises a step-down converter. Preferably the control unit provides a supply voltage to its second output that might be equal or higher than the first output voltage supplied to the first output. Particularly preferred, the active balancing unit is configured for balancing the single cell supplying the RTC with the remaining cells of the plurality of battery cells, particularly preferred with a selected one of the plurality of battery cells. Thus, the charge loss of the single battery cell due to supplying the RTC in both operation states can be actively balanced during the second operation state. The active balancing unit is preferably inactive in the first operation state, wherein the outputs of the control unit are not energized.

Further preferred, the control unit of the battery system according to the present invention is configured for performing the method according to the present invention. A further aspect of the invention relates to a vehicle including a battery system, as defined above. Further aspects of the present invention are disclosed in the dependent claims or the following description of the drawings.

### Brief Description of the Drawings

Features will become apparent to those of ordinary skill in the art by describing in detail exemplary embodiments with reference to the attached drawings in which:
- Fig. 1: illustrates a schematic circuit diagram of a power supply circuit of a real time clock according to the prior art;
- Fig. 2: illustrates a schematic connection diagram of a real time clock according to the prior art;
- Fig. 3: illustrates a schematic circuit diagram of a power supply circuit of a real time clock according to a first embodiment; and
- Fig. 4: illustrates a schematic circuit diagram of a power supply circuit of a real time clock according to a second embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

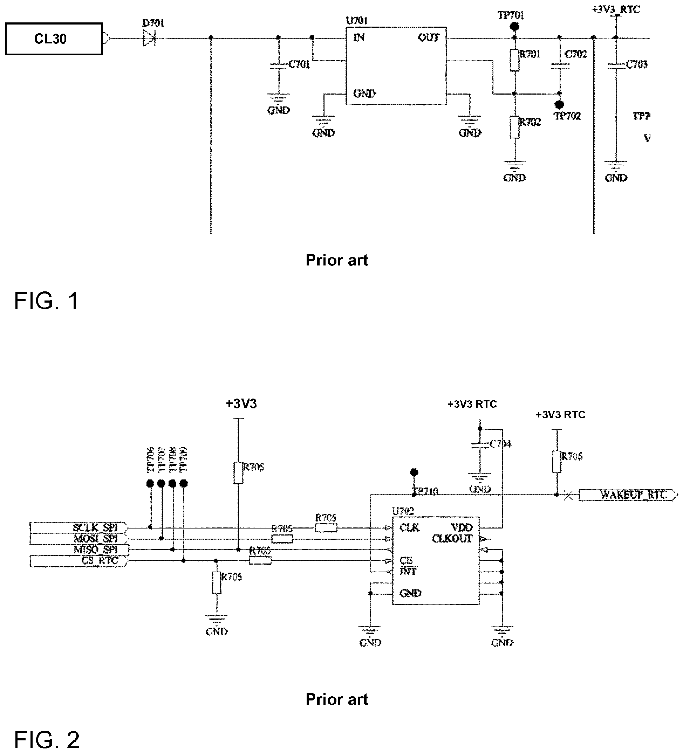

Figure 1 shows a schematic circuit diagram of a power supply circuit of a real time clock according to the prior art. Therein an input voltage CL30 of LDO linear voltage regulator U701 is provided to the anode of diode D701 and the cathode of diode D701 is electrically connected with a first input of LDO U701. The input voltage CL30 of LDO U701 may be supplied from at least one cell of a plurality of battery cells (not shown). Further inputs of LDO U701 are supplied with ground voltage GND. A condenser C701 is connected in parallel to LDO U701 and functions as low-pass for conducting HF parts of the battery voltage to ground. A first output of LDO U701 is electrically connected to a +3V3_RTC node and hence, in a certain range of cell voltage a substantially constant RTC voltage of 3.3 V is provided to the +3V3_RTC node.

Figure 2 illustrates a schematic connection diagram of a real time clock U702 according to the prior art, wherein the +3V3_RTC node shown in Fig. 1 is connected to various nodes shown in Fig. 2. For supplying the RTC U702, the regulated operation voltage of substantially 3.3 V is provided to the VDD input pin of RTC U702. The RTC U702 is solely supplied via the output of LDO U701. The RTC U702 is further electrically connected to ground GND and comprises a plurality of input pins electrically connected to a plurality of serial peripheral interfaces SPI. An output pin CLKOUT of the RTC U702 provides a fixed output frequency as clock signal and an output pin /INT is an open drain output configured to output a wake up signal WAKEUP_RTC. As can be seen from the combination of Figs. 1 and 2 the LDO U701 must be continuously active in order to provide energy to the RTC U702. Thus, power dissipation occurs constantly in the LDO U701 and lowers the efficiency of the system.

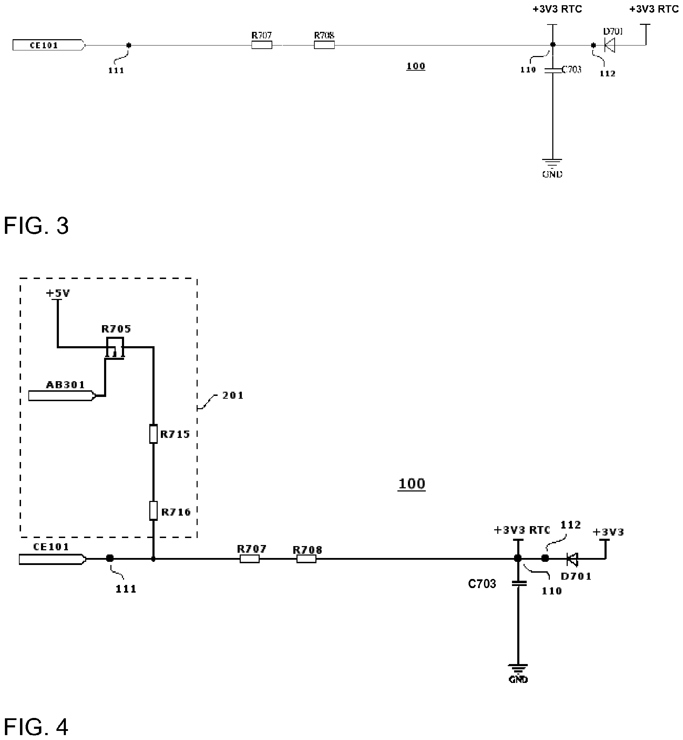

Figure 3 illustrates a schematic circuit diagram of a power supply circuit 100 of a real time clock U702 of a battery system (not shown) according to a first embodiment of the invention. According to Fig. 3 a single battery cell CE101 of a plurality of battery cells (not shown) is connected with a first node 111 such that solely the voltage of the first battery cell CE101 is applied to the first node 111. This is either realized by connecting a first clamp (not shown) and a second clamp (not shown) to the first node 111 and by electrically connecting the single battery cell CE101 between the first clamp and the second clamp. Alternatively the plurality of battery cells is electrically connected in series and/or in parallel between a first terminal (not shown) and a second terminal (not shown) and the single battery cell CE101 is electrically connected between one of these terminals and the first node 111.

The first node 111 is electrically connected to a central node 110, wherein a first ohmic resistor R707 with a resistance of 100 kOhm and a second ohmic resistor R708 with a resistance of 100 kOhm are electrically connected between the first node 111 and the central node 110. The central node 110 is electrically connected to the supply node +3V3_RTC that is electrically connected to the VDD input pin of the RTC U702 shown in Fig. 2. The central node 110 is further electrically connected to a second node 112 that is electrically connected with a first output of a control unit (not shown). The control unit is electrically connected to a plurality of battery cells and supplies a voltage of 3.3 V to its first output while it is active. A diode D701 is electrically connected between the second node 112 and the first output of the control unit (not shown). Further a condenser C703 is electrically connected as an energy storage element between the central node 110 and GND.

In a first operation state of the battery system the control unit (not shown) is inactive and thus no voltage is applied to the first output. In this first operation state, the single battery cell CE101 provides a first voltage of approximately 4V to the first node 111. The RTC U702 that is connected to the node +3V3_RTC has a nominal current consumption between 0.6 µA and 1.2 µA as the inactive control unit (not shown) does not conduct any communication with the RTC U702. The RTC U702 requires an input voltage of 3.3 V. At a current between 0.6 µA and 1.2 µA the resistances R707 and R708 effect a voltage drop such that a voltage of approximately 3.3 V applies to the central node 110 and the second node 112. The diode D701 prevents that the inactive control unit (not shown) functions as current sink. From the central node 110 the voltage applies to node +3V3_RTC and is utilized to power the RTC U702. Thus, in the first operation state the RTC U702 is powered without operating any active switching means and thus power consumption of the battery system comprising the power supply circuit 100 as shown in Figure 3 is reduced and no switching noise occurs.

The first output of the control unit (not shown) and thus the second node 112 are set to a supply voltage of 3.3 V if the control unit is active in a second state of a battery system. In the second operation state the control unit (not shown) communicates with the RTC U702, i.e. transmits control information to the RTC U702. Receiving and processing the control information as well as transmitting an RTC response to the control unit (not shown) increases the power demand of the RTC U702. Particularly, the current consumption of the RTC U702 increases at the fixed input voltage of 3.3 V and thus the voltage drop at the resistances R707 and R708 increases. Hence, the single battery cell CE101 is not sufficient to provide the operation voltage to the RTC U702. However, as the control unit (not shown) is active it supplies a voltage of 3.3 V to its first output. Thus, a voltage of approximately 2.6 V is provided to second node 112. Thereby sufficient power for supplying RTC U702 is provided to the central node 110 via the first node 111 and the second node 112. Thus, the increased power demand of the RTC U702 can be met as it passively draws current via the first node 111 and the second node 112, i.e. the first output of the control unit (not shown).

The condenser C703 comprises a capacity of 2.2 µC and is charged in the second operation state. At the end of the first operation state, the RTC U702 transmits a wake up signal WAKEUP_RTC via output /INT to the control unit (not shown). The additional power required for generating and transmitting this signal is provided by condenser C703 that is discharged. In response to the wake up signal the control unit (not shown) wakes up and thus initiates the second operation state, in which the condenser C703 is again charged. Thus, the RTC U702 is securely power supplied in all of its operation states via the simple power supply circuit 100 as shown in Fig. 3 without any active switching means and thus with increased efficiency.

Figure 4 illustrates a schematic circuit diagram of a power supply circuit 100 of a real time clock RTC U702 of a battery system (not shown) according to a second embodiment of the invention. According to this embodiment, an active balancing circuit 201 is electrically connected to the power supply circuit 100 as shown in Fig. 3. The active balancing circuit 201 comprises a balancing control unit AB301 that controls the gate of the n-channel FET R705 (with free-wheeling diode). The source of FET R705 is electrically connected to a second output of the control unit (not shown) that supplies a voltage of 5 V. The drain of FET R705 is electrically connected to the conductor of the power supply circuit 100 between the first node 111 and the central node 110 via a first ohmic resistor R715 with 24 kOhm resistance and a second ohmic resistor R716 with 24 kOhm resistance. The balancing control unit AB301 sets the conductance of FET R705 dependent on an actual voltage measurement of one or more of the plurality of battery cells. The resistors R715 and R716 provide a voltage drop and thus adapt the output voltage of FET R705 to the charging voltage requirements of the single battery cell CE101. The balancing occurs in the second operating state of the battery system, while the control unit (not shown) is active. Thus, misbalancing between the battery cells can be avoided and the nominal capacity of the battery system might be increased. The further components of the power supply circuit are identical to the components of the circuit of Fig. 3 and hence their description is omitted.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

## Claims

1. Battery system with internally powered real time clock (702), comprising
a plurality of battery cells connected in series and/or in parallel between a first terminal and a second terminal;
a control unit configured for receiving an input voltage from the plurality of battery cells and providing a supply voltage to a first output of the control unit; and
a real time clock (702) electrically connected to the first output of the control unit and to a first node (111) of the plurality of battery cells and configured for drawing power from at least one of the first node (111) and the first output of the control unit; wherein
a single battery cell (CE101) of the plurality of battery cells is electrically connected between the first node (111) and one of the first terminal and the second terminal, **characterized in that**
the control unit is configured to be inactive in a first operation state of the battery system and active in a second operation state of the battery system, and
the real time clock (702) is configured to draw power via the first node (111) in the first operation state and to draw power via the first node (111) and the first output of the control unit in the second operation state of the battery system.

2. Battery system according to claim 1,
wherein the control unit is configured for transmitting control information to the real time clock (702) during the second operation state of the battery system, and
wherein the real time clock (702) is configured for receiving and processing the control information under additional power consumption.

3. Battery system according to claim 1 or 2,
wherein the real time clock (702) is configured for transmitting a wake up signal to the control unit in the first operation state of the battery system, and
wherein the control unit is configured for transferring the battery system to the second operation state in response to the wake up signal.

4. Battery system according to claim 2, further comprising
an energy storage element (703) configured for supplying power to the real time clock (702) for transmitting the wake up signal to the control unit.

5. Battery system according to any one of the preceding claims, further comprising
an active balancing unit (201) electrically connected to the first node (111) of the plurality of battery cells (101) and configured for supplying power to the single battery cell (101).

6. Battery system according to claim 5, wherein the active balancing unit (201) is electrically connected to a second output of the control unit and comprises a step-down converter.

7. Battery system according to any one of the preceding claims,
wherein the plurality of battery cells (101), the control unit and the real time clock (702) are arranged in a common housing, and/or
wherein the control unit and the real time clock (702) are arranged on a common circuit carrier.

8. Power supply system comprising a real time clock, a control unit and a power supply circuit (100), the power supply circuit (100) comprising
a central node (110) electrically connected to a power input of the real time clock (702);
a first node (111) electrically connected to the central node (110); and
a second node (112) electrically connected to the central node (110) and to a first output of the control unit, wherein
a single battery cell (CE101) of a plurality of battery cells connectable in parallel and/or in series between a first and a second terminal is connectable between the first node (111) and one of the first and second terminal,
the control unit is configured to provide a supply voltage to the first output, **characterized in that** the control unit is configured to be inactive in a first operation state and active in a second operation state, and
the real time clock (702) is configured to draw power via the first node (111) in the first operation state and to draw power via the first node (111) and the first output of the control unit in the second operation state.

9. Power supply system according to claim 8, the power supply circuit (100) further comprising an energy storage element (703) electrically connected to the central node (110) and configured for supplying power to the real time clock (702) for transmitting a wake up signal to the control unit.

10. Power supply system according to claim 8 or 9, the power supply circuit (100) further comprising an active balancing unit (201) electrically connected between the first node (111) and a second output of the control unit and comprising a step-down converter.

## Patentansprüche

1. Batteriesystem mit intern angetriebener Echtzeituhr (720), aufweisend
eine Vielzahl von Batteriezellen, die zwischen einen ersten Anschluss und einen zweiten Anschluss in Reihe und/oder parallel geschaltet sind;
eine Steuerungseinheit, die konfiguriert ist, um eine Eingangsspannung von der Vielzahl der Batterien zu erhalten und um eine Versorgungsspannung zu einem ersten Ausgang der Steuerungseinheit zu liefern; und
eine Echtzeituhr (702), die mit dem ersten Ausgang der Steuerungseinheit und mit einem ersten Knoten (111) der Vielzahl der Batteriezellen elektrisch verbunden ist und konfiguriert ist, um Energie von zumindest einem des ersten Knotens (111) und des ersten Ausgangs der Steuerungseinheit zu beziehen;
wobei eine einzelne Batteriezelle (CE101) der Vielzahl der Batteriezellen elektrisch zwischen den ersten Knoten (111) und einen des ersten Anschlusses und des zweiten Anschlusses geschaltet ist,
**dadurch gekennzeichnet, dass**
die Steuerungseinheit konfiguriert ist, um in einem ersten Betriebszustand des Batteriesystems inaktiv zu sein und in einem zweiten Betriebszustand des Batteriesystems aktiv zu sein, und
die Echtzeituhr (702) konfiguriert ist, um im ersten Betriebszustand Energie über den ersten Knoten (111) zu beziehen und um im zweiten Betriebszustand des Batteriesystems Energie über den ersten Knoten (111) und den ersten Ausgang der Steuerungseinheit zu beziehen.

2. Batteriesystem nach Anspruch 1,
wobei die Steuerungseinheit konfiguriert ist, um während des zweiten Betriebszustands des Batteriesystems Steuerungsinformationen zur Echtzeituhr (702) zu übertragen, und
wobei die Echtzeituhr (702) konfiguriert ist, um unter zusätzlichem Energieverbrauch die Steuerungsinformationen zu empfangen und zu verarbeiten.

3. Batteriesystem nach Anspruch 1 oder 2,
wobei die Echtzeituhr (702) konfiguriert ist, um im ersten Betriebszustand des Batteriesystems ein Wecksignal zur Steuerungseinheit zu übertragen, und
wobei die Steuerungseinheit konfiguriert ist, um das Batteriesystem in Reaktion auf das Wecksignal in den zweiten Betriebszustand zu überführen.

4. Batteriesystem nach Anspruch 2, ferner aufweisend
ein Energiespeicherelement (703), das konfiguriert ist, um die Echtzeituhr (702) mit Energie zu versorgen, um das Wecksignal zur Steuerungseinheit zu übertragen.

5. Batteriesystem nach einem der vorhergehenden Ansprüche, ferner aufweisend
eine aktive Ausgleichseinheit (201), die mit dem ersten Knoten (111) der Vielzahl der Batteriezellen (101) elektrisch verbunden ist und konfiguriert ist, um die einzelne Batteriezelle (101) mit Energie zu versorgen.

6. Batteriesystem nach Anspruch 5, wobei die aktive Ausgleichseinheit (201) mit einem zweiten Ausgang der Steuerungseinheit elektrisch verbunden ist und einen Abwärtswandler aufweist.

7. Batteriesystem nach einem der vorhergehenden Ansprüche,
wobei die Vielzahl der Batteriezellen (101), die Steuerungseinheit und die Echtzeituhr (702) in einem gemeinsamen Gehäuse angeordnet sind, und/oder
wobei die Steuerungseinheit und die Echtzeituhr (702) auf einem gemeinsamen Schaltungsträger angeordnet sind.

8. Stromversorgungssystem, aufweisend eine Echtzeituhr, eine Steuerungseinheit und eine Stromversorgungsschaltung (100), wobei die Stromversorgungsschaltung (100) aufweist
einen zentralen Knoten (110), der mit einem Leistungseingang der Echtzeituhr (702) elektrisch verbunden ist,
einen ersten Knoten (111), der mit dem zentralen Knoten (110) elektrisch verbunden ist; und
einen zweiten Knoten (112), der mit dem zentralen Knoten (110) und mit einem ersten Ausgang der Steuerungseinheit elektrisch verbunden ist,
wobei
eine einzelne Batteriezelle (CE101) einer Vielzahl von Batteriezellen, die zwischen einen ersten und einen zweiten Anschluss parallel und/oder in Reihe geschaltet werden kann, zwischen den ersten Knoten (111) und einen des ersten und zweiten Anschlusses geschaltet werden kann,
die Steuerungseinheit konfiguriert ist, um eine Versorgungsspannung zum ersten Ausgang zu liefern,
**dadurch gekennzeichnet, dass** die Steuerungseinheit konfiguriert ist, um in einem ersten Betriebszustand inaktiv und in einem zweiten Betriebszustand aktiv zu sein, und
die Echtzeituhr (702) konfiguriert ist, um im ersten Betriebszustand über den ersten Knoten (111) Energie zu beziehen und um im zweiten Betriebszustand über den ersten Knoten (111) und den ersten Ausgang der Steuerungseinheit Energie zu beziehen.

9. Stromversorgungssystem nach Anspruch 8, wobei die Stromversorgungsschaltung (100) ferner ein Energiespeicherelement (703) aufweist, das mit dem zentralen Knoten (110) elektrisch verbunden ist und konfiguriert ist, um die Echtzeituhr (702) mit Energie zu versorgen, um ein Wecksignal zur Steuerungseinheit zu übertragen.

10. Stromversorgungssystem nach Anspruch 8 oder 9,
wobei die Stromversorgungsschaltung (100) ferner eine aktive Ausgleichseinheit (201), die elektrisch zwischen den ersten Knoten (111) und einen zweiten Ausgang der Steuerungseinheit geschaltet ist und einen Abwärtswandler aufweist, aufweist.

## Revendications

1. Système de batterie pourvu d'une horloge en temps réel alimentée en interne (702), comprenant :
une pluralité de cellules de batterie connectées en série et/ou en parallèle entre une première borne et une deuxième borne ;
une unité de commande configurée pour recevoir une tension d'entrée provenant de la pluralité de cellules de batterie et fournir une tension d'alimentation à une première sortie de l'unité de commande ; et
une horloge en temps réel (702) électriquement connectée à la première sortie de l'unité de commande et à un premier noeud (111) de la pluralité de cellules de batterie et configurée pour prélever de la puissance à partir d'au moins l'un du premier noeud (111) et de la première sortie de l'unité de commande ;
dans lequel une seule cellule de batterie (CE101) de la pluralité de cellules de batterie est électriquement connectée entre le premier noeud (111) et l'une de la première borne et de la deuxième borne,
**caractérisé en ce que**
l'unité de commande est configurée pour être inactive dans un premier état de fonctionnement du système de batterie et active dans un deuxième état de fonctionnement du système de batterie, et
l'horloge en temps réel (702) est configurée pour prélever de la puissance par l'intermédiaire du premier noeud (111) dans le premier état de fonctionnement et pour prélever de la puissance par l'intermédiaire du premier noeud (111) et de la première sortie de l'unité de commande dans le deuxième état de fonctionnement du système de batterie.

2. Système de batterie selon la revendication 1,
dans lequel l'unité de commande est configurée pour transmettre des informations de commande à l'horloge en temps réel (702) pendant le deuxième état de fonctionnement du système de batterie, et
dans lequel l'horloge en temps réel (702) est configurée pour recevoir et traiter les informations de commande sous une consommation de puissance supplémentaire.

3. Système de batterie selon la revendication 1 ou 2,
dans lequel l'horloge en temps réel (702) est configurée pour transmettre un signal de réveil à l'unité de commande dans le premier état de fonctionnement du système de batterie, et
dans lequel l'unité de commande est configurée pour faire passer le système de batterie au deuxième état de fonctionnement en réponse au signal de réveil.

4. Système de batterie selon la revendication 2, comprenant en outre un élément de stockage d'énergie (703) configuré pour fournir de la puissance à l'horloge en temps réel (702) pour transmettre le signal de réveil à l'unité de commande.

5. Système de batterie selon l'une quelconque des revendications précédentes, comprenant en outre une unité d'équilibrage actif (201) électriquement connectée au premier noeud (111) de la pluralité de cellules de batterie (101) et configurée pour fournir de la puissance à la seule cellule de batterie (101).

6. Système de batterie selon la revendication 5, dans lequel l'unité d'équilibrage actif (201) est électriquement connectée à une deuxième sortie de l'unité de commande et comprend un convertisseur abaisseur.

7. Système de batterie selon l'une quelconque des revendications précédentes,
dans lequel la pluralité de cellules de batterie (101), l'unité de commande et l'horloge en temps réel (702) sont agencées dans un boîtier commun, et/ou
dans lequel l'unité de commande et l'horloge en temps réel (702) sont agencées sur un support de circuit commun.

8. Système d'alimentation électrique comprenant une horloge en temps réel, une unité de commande et un circuit d'alimentation électrique (100), le circuit d'alimentation électrique (100) comprenant :
un noeud central (110) électriquement connecté à une entrée de puissance de l'horloge en temps réel (702) ;
un premier noeud (111) électriquement connecté au noeud central (110) ; et
un deuxième noeud (112) électriquement connecté au noeud central (110) et à une première sortie de l'unité de commande,
dans lequel
une seule cellule de batterie (CE101) d'une pluralité de cellules de batterie pouvant être connectées en parallèle et/ou en série entre des première et deuxième bornes peut être connectée entre le premier noeud (111) et l'une des première et deuxième bornes,
l'unité de commande est configurée pour fournir une tension d'alimentation à la première sortie,
**caractérisé en ce que** l'unité de commande est configurée pour être inactive dans un premier état de fonctionnement et active dans un deuxième état de fonctionnement, et
l'horloge en temps réel (702) est configurée pour prélever de la puissance par l'intermédiaire du premier noeud (111) dans le premier état de fonctionnement et pour prélever de la puissance par l'intermédiaire du premier noeud (111) et de la première sortie de l'unité de commande dans le deuxième état de fonctionnement.

9. Système d'alimentation électrique selon la revendication 8, le circuit d'alimentation électrique (100) comprenant en outre un élément de stockage d'énergie (703) électriquement connecté au noeud central (110) et configuré pour fournir de la puissance à l'horloge en temps réel (702) pour transmettre un signal de réveil à l'unité de commande.

10. Système d'alimentation électrique selon la revendication 8 ou 9, le circuit d'alimentation électrique (100) comprenant en outre une unité d'équilibrage actif (201) électriquement connectée entre le premier noeud (111) et une deuxième sortie de l'unité de commande et comprenant un convertisseur abaisseur.
